# EUROPEAN PATENT SPECIFICATION

(11) **EP 2 119 943 B1**
(45) Date of publication and mention of the grant of the patent: **12.10.2011**
(21) Application number: 09160017.1
(22) Date of filing: 12.05.2009
(51) Int. Cl.: F16H 61/46, F16H 61/42, B60W 30/18, B60W 10/06, F16H 59/42, F16H 59/44, F16H 59/36

(54) **Control apparatus for hydraulic driving vehicle**
Steuervorrichtung für ein hydraulisch angetriebenes Fahrzeug
Appareil de contrôle de véhicule à entrainement hydrostatique

(30) Priority: 13.05.2008 JP 2008126367
(43) Date of publication of application: 18.11.2009
(73) Proprietor: Kobelco Cranes Co., Ltd., Tokyo 141-8626 (JP); Kabushiki Kaisha Kobe Seiko Sho (Kobe Steel, Ltd.), Kobe-shi, Hyogo 651-8585 (JP)
(72) Inventor: Hori, Naoto, c/o Kobe Corp. Research Lab. in Kobe Steel, Ltd., Kobe-shi, Hyogo 651-2271 (JP); Sugano, Naoki, c/o Kobe Corp. Research Lab. in Kobe Steel, Ltd., Kobe-shi Hyogo 651-2271 (JP); Kobayashi, Takahiro, c/o Okubo Plant in Kobelco Cranes Co., Ltd, Akashi-shi Hyogo 674-0063 (JP); Shimomura, Koichi, c/o Okubo Plant in Kobelco Cranes Co., Ltd., Akashi-shi Hyogo 674-0063 (JP); Tsunoo, Taisuke, c/o Okubo Plant in Kobelco Cranes Co., Ltd, Akashi-shi Hyogo 674-0063 (JP); Terasaka, Joji, c/o Okubo Plant in Kobelco Cranes Co., Ltd., Akashi-shi Hyogo 674-0063 (JP)
(74) Representative: TBK

(56) References cited:
- EP-A2- 1 609 659
- US-A- 5 503 534
- US-A1- 2004 014 557
- US-B1- 6 343 470

## Description

The present invention relates to a control apparatus of a hydraulic driving vehicle according to the preamble of claim 1, for example a wheel loader, a wheel crane and so on.

In general, a hydraulic transmission (HST) is used in this kind of hydraulic driving vehicle.

In general HST technology, a relationship between an engine rotating speed and a pump displacement is previously determined. When the vehicle drives at a constant speed, the pump displacement is increased or decreased in accordance with a change of the engine rotating speed. In other words, the pump displacement is increased when the engine rotating speed becomes higher, and the pump displacement is decreased when it becomes lower.

However, in the conventional technology which determines the pump displacement based on only the engine rotating speed, since it is impossible to control the pump displacement in response to the relationship with the driving speed, there was a problem that fuel consumption rate becomes worse, in particular, especially in high speed driving condition.

As a technology whose object is to improve fuel consumption rate of a low speed vehicle like a folk-lift in a low driving speed zone, the technology described in JP-A-9-301016 is known. In this conventional technology, in a low acceleration zone where an accelerator is slightly operated, a changing rate of engine rotating speed corresponding to the amount of accelerator operation is set so as to be less than that in other acceleration zones. Therefore, it is possible to improve fuel efficiency because a change of engine rotating speed corresponding to a change of the amount of accelerator operation can be suppressed in the low driving speed zone.

However, although the above-mentioned conventional technology is effective to the low speed vehicle, it was a problem that it is impossible to apply the technology for a high speed vehicle which frequently drives at a high speed, like a wheel loader or a wheel crane. In these kinds of high speed vehicles, the fuel efficiency becomes worse because the engine rotating speed becomes high in the high speed zone.

EP 1 609 659 A2 shows a generic control apparatus of a hydraulic driven vehicle according to the preamble of claim 1, comprising an engine; a variable displacement hydraulic pump driven by the engine; a hydraulic motor driven by hydraulic oil supplied from the hydraulic pump; a driving speed detecting means for detecting a driving speed of the hydraulic driven vehicle; and an engine rotating speed detecting means for detecting a rotation speed of the engine. Here, a vehicle traveling speed is a function both of a speed ratio of an output/input rotation speed ratio of the continuously variable transmission of the hydraulic driven vehicle and of the engine rotation speed.

US 6 343 470 B1 shows another control apparatus of a hydraulic driven vehicle, in which a target engine speed or a target change gear ratio is determined on the basis of a degree of opening of a throttle valve and a speed of an engine so that the change gear ratio of the continuously variable transmission of the hydraulic driven vehicle is controlled on the basis of the thus determined target engine speed or target change gear ratio.

### SUMMARY OF THE INVENTION

It is an object of the present invention to further develop a control apparatus of a hydraulic driving vehicle according to the preamble of claim 1 such that fuel efficiency for a high speed zone of hydraulic driving vehicle is improved.

The object of the present invention is achieved by a control apparatus of a hydraulic driving vehicle having the features of claim 1.

Further advantageous developments are defined in the dependent claims.

According to the present invention, because the engine rotating speed can be decreased by increasing the pump displacement in a high speed zone more than that in a low speed zone, it is possible to improve the fuel efficiency in a high speed vehicle like a wheel crane which frequently drives at a high speed. Moreover, it is possible to improve pump efficiency by increasing the pump displacement. In addition to these merits, by lowering the engine rotating speed, rotating speeds of a cooling fan and an auxiliary pump also goes down because these devices are also driven by the engine. For this reason, energy loss caused by these devices is also decreased, so that the fuel efficiency becomes much better.

In a preferable embodiment of the present invention, the function of the control means is kept constant regardless of a change of the driving speed, either in a high speed zone where the driving speed is higher than an upper limit or in a low speed zone where it is lower than a lower limit, or both in the zones.

In this case, it is possible to keep the pump displacement within a certain range at least one of in the high speed zone and in the low speed zone. Accordingly, it is possible to remove a disadvantage that the accelerating performance becomes worse by reason of too small pump displacement in the low speed zone. Moreover, it is also possible to remove another disadvantage that shortage of power or deterioration of engine efficiency caused by too low engine rotating speed makes the fuel efficiency worse in the high speed zone.

In another preferable embodiment of the present invention, the control means controls the engine so as to keep the driving speed lower than the upper limit.

In this case, in a vehicle limiting the engine rotating speed, by executing the control using the above-mentioned function, it is possible to decrease the engine rotating speed to a greater extent so that the fuel efficiency is more improved in case of driving at a predetermined speed limit.

In further another preferable embodiment of the present invention, an acceleration inputting means for inputting an acceleration signal and a manipulated accelerator amount detecting means are further provided. The manipulated acceleration amount detecting means detects the manipulated amount of the acceleration inputting means. The control means determines the set value for pump displacement with the function which sets the set value for pump displacement in a little manipulated accelerator zone so as to be larger than the set value for pump displacement in a large manipulated accelerator zone. In the little manipulated accelerator zone, the amount of manipulated accelerator is not more than a set value for manipulated accelerator amount. In the large manipulated accelerator zone, the amount is more than the set value for manipulated accelerator amount.

In this case, even in the little manipulated accelerator zone, it is possible to decrease the engine rotating speed by increasing the pump displacement. Accordingly, even in the driving condition where the energy and load necessary for driving are low, for example, in driving at a low speed or in driving on an uphill road, the fuel efficiency is improved.

In further another preferable embodiment of the present invention, the control means keeps the function constant regardless of a change of manipulated accelerator amount, in an extra little acceleration zone where the manipulated accelerator amount is less than a lower limit of the little manipulated accelerator zone.

In this case, because the set value for pump displacement can be kept within a certain range, in the extra little manipulated accelerator zone, it is possible to remove a disadvantage, engine stopping, which is caused by too much pump displacement.

### BRIEF DESCRIPTION OF THE DRAWINGS

Figure 1 is a block diagram showing a driving system and a control system in the first embodiment of the present invention;
Figure 2 is a graph showing a relationship between an engine rotating speed and a set value for pump displacement;
Figure 3 is a graph showing a relationship between an engine rotating speed and a fuel consumption rate;
Figure 4 is a graph showing a change of the engine rotating speed in accelerating at a maximum rate;
Figure 5 is a graph showing an effect of decrease of engine rotating speed in limiting an upper driving speed;
Figure 6 is a block diagram showing a driving system and a control system in the second embodiment of the present invention;
Figure 7 is a graph showing a relationship between an engine rotating speed and a set value for pump displacement; and
Figure 8 is a flow chart for explaining an operation flow of the second embodiment of the present invention.

### DETAILED DESCRIPTION OF THE PREFERRED EMBODIMENTS

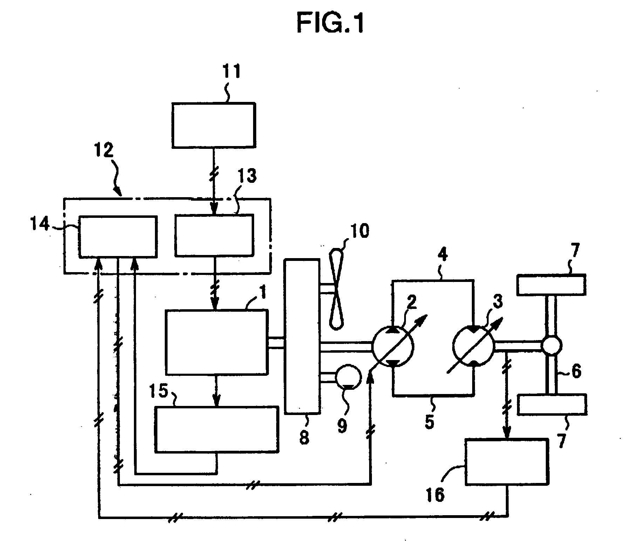

### First Embodiment (Figures 1 to 5)

Figure 1 shows a driving system and a control system of the first embodiment. In Fig.1, an engine 1 drives a variable displacement hydraulic pump 2. A variable displacement hydraulic motor 3 is driven by discharged oil of the hydraulic pump 2. The hydraulic pump 2 and the hydraulic motor 3 are connected each other with pipe lines 4 and 5 so as to form a close circuit. The rotation power of the hydraulic motor 3 is transmitted to wheels 7 via an axel 6. A power divider 8 divides a power of the engine 1 into powers for the hydraulic pump 2, for an auxiliary pump 9 and for a cooling fan 10.

An acceleration inputting means 11 outputs to the engine 1 a signal showing the amount of accelerator manipulation. In this embodiment, the acceleration inputting means 11 is an accelerator pedal. The signal from the acceleration inputting means 11 is inputted to an engine control portion 13 of a control means 12. The engine 1 notates by conducting fuel injection at an accelerator opening degree corresponding to the signal. An engine rotation detecting means 15 detects a rotation number of the engine, and a driving speed detecting means 16 detects a driving speed. The engine rotation number and the driving speed, which are detected by both detecting means 15 and 16, are inputted to a pump control portion 14 of the control means 12. The pump control portion 14 selects a function deriding a set value for pump displacement, based on the detected engine rotation number and the detected driving speed. Based on the set value for pump displacement which is calculated with the function, the pump control portion 14 controls the displacement of the hydraulic pump 2.

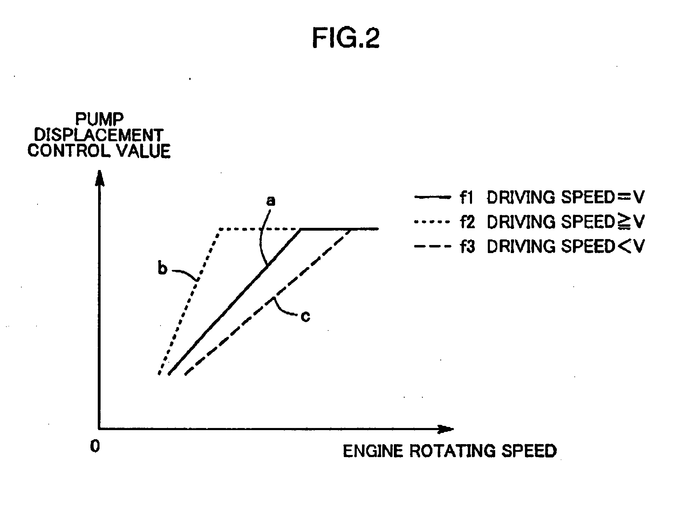

This point is described in detail hereinafter. Conventionally, when a HST type vehicle drives at a constant speed, the displacement of the hydraulic pump 2 is controlled by the set value for pump displacement. The set value is calculated by multiplying the engine rotating speed by the determined function. Accordingly, the set value for pump displacement is determined, based on only the engine rotating speed. As shown with the mark "a" in Fig.2, in the driving speed "V", the set value for pump displacement is determined by multiplying the engine rotating speed by the function "f1".

In this embodiment, the function regarding the engine rotating speed is varied in accordance with the driving speed. Accordingly, in a high driving speed zone where the driving speed is more than the set value "V", as shown with the mark "b" in Fig.2, the set value for pump displacement is determined by a function "f2" which is set so as to make the set value for pump displacement more than that of the function "f1". On the other hand, in a low driving speed zone where driving speed is less than the set value "V", as shown with the mark "c" in Fig.2, the set value for pump displacement is determined by a function "f3" which is set so as to make the set value for pump displacement less than that of the function "f1". In other words, the set value for pump displacement in the high driving speed zone is larger than that in the low driving speed zone.

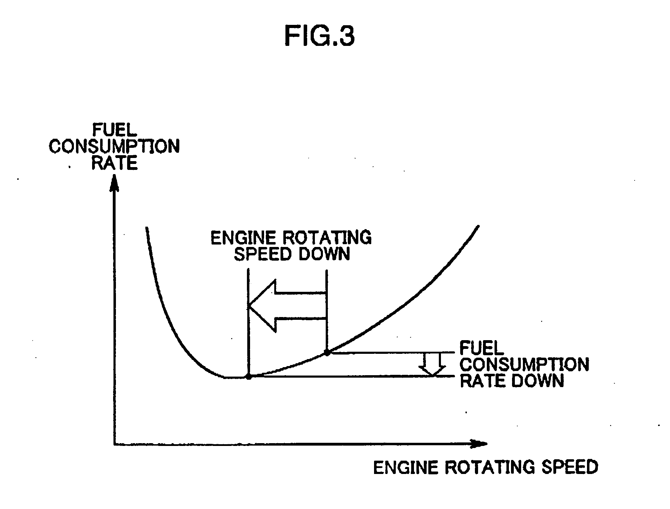

In this embodiment, comparing with the conventional technology whose function can not be changed, it is possible to decrease the engine rotating speed which can obtain the same amount of discharged oil from the pump in the high driving speed zone. For this reason, as shown in Fig.3, it is possible to improve fuel consumption rate in response to the amount of engine rotating speed decreasing. As the amount of discharged oil from the pump corresponds to the driving speed, it is possible to improve fuel efficiency in a high speed vehicle like a wheel crane which often drives at a high speed.

In addition to this merit, it is possible to improve efficiency of the pump because of increasing the pump displacement. Moreover, because the rotating speeds of the auxiliary pump 9 and the cooling fan 10 which are driven by the power divider 8 also goes down in response to the decrease of the engine rotating speed, energy loss occurred in these devices is also decreased. For these reasons, the fuel efficiency becomes much better.

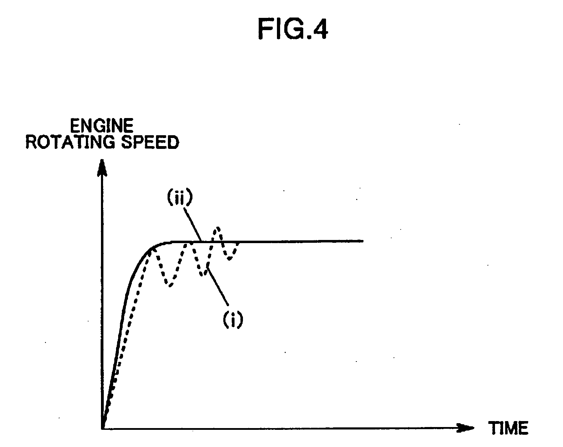

On the other hand, in the control as shown with the mark "b" in Fig.2, the changing rate of the set value for pump displacement in response to the engine rotating speed is relatively large. In the case that only this control is executed, a disadvantage occurs so that the engine rotating speed becomes instable at the start stage. As shown with the mark (i) in Fig. 4, in accelerating from a stopping condition to a full speed driving condition, the engine rotating speed at the start stage becomes instable.

In this first embodiment, in the low speed zone, as shown with the mark "c" in Fig.2, a control is executed so as to decrease the changing rate of the set value for pump displacement in response to the engine rotating speed. For this reason, as shown with the mark (ii) in Fig.4, the engine rotating speed at the start stage becomes stable.

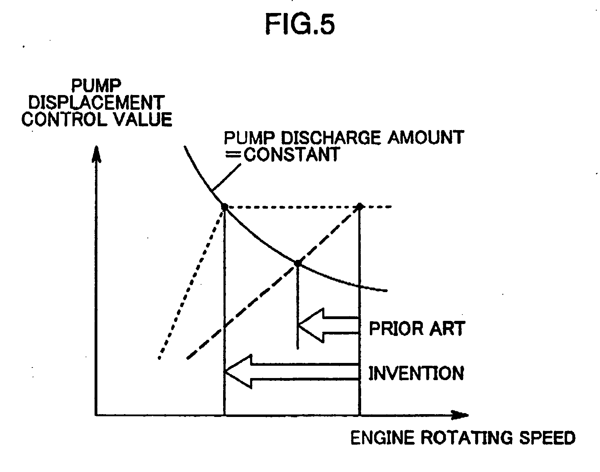

In the case that the engine rotating speed is limited so that the driving speed is less than a certain value, in the first embodiment, in addition to the control limiting the engine rotating speed, the above-mentioned control changing the function is executed. For this reason, as shown in Fig.5, because it is possible to decrease the engine rotating speed to a greater extent, the fuel efficiency is more improved in case of driving at a predetermined speed limit.

By the way, in this embodiment, it is preferable that, setting an upper limit in a high speed zone and a lower limit in a low speed zone, the function keeps constant regardless of the change of driving speed in the zones where the driving speed is more than the upper limit or it is less than the lower limit. In this case, it is possible that the pump displacement keeps within a constant range both in the high and low speed zones. Accordingly, it is possible to remove the disadvantage that the accelerating performance becomes worse by reason of too little pump displacement in the low speed zone. Moreover, it is also possible to remove the disadvantage that shortage of power or deterioration of engine efficiency by reason of too little engine rotating speed in the high speed zone makes fuel efficiency worse.

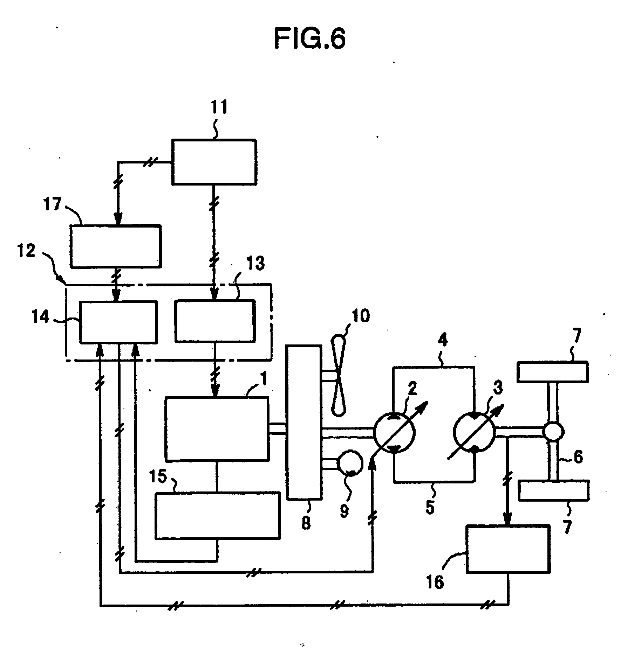

### Second Embodiment (Figures 6 to 8)

Only the differences from the first embodiment are explained hereinafter. In the second embodiment, not only in addition to the improvement of the fuel efficiency in the high speed zone, but also in the low speed zone where the amount of manipulated accelerator is a little, the fuel efficiency is improved by decreasing the engine rotating speed. The amount of manipulated accelerator corresponds to a load occurred in driving.

As shown in Fag.6, a manipulated accelerator amount detecting means 17 is added as another detecting means. The manipulated accelerator amount detecting means 17 detects the amount of manipulated accelerator by a signal from the acceleration inputting means 11. The amount of manipulated accelerator is transmitted to the pump control portion 14 together with the engine rotating speed and the driving speed. The pump control portion 14 determines the set value for pump displacement based on these signals.

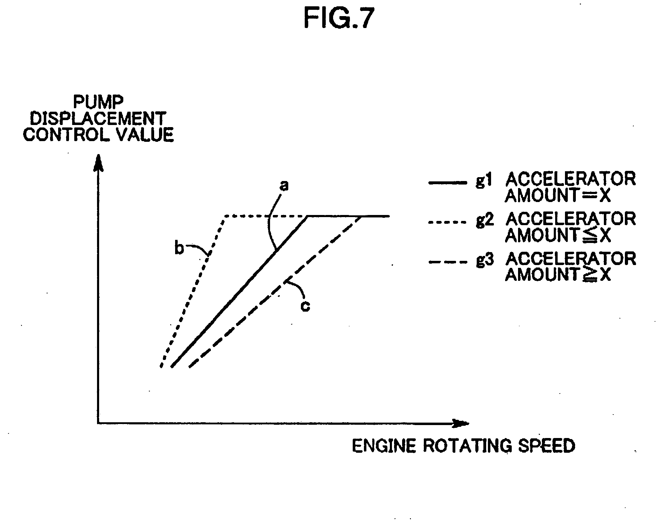

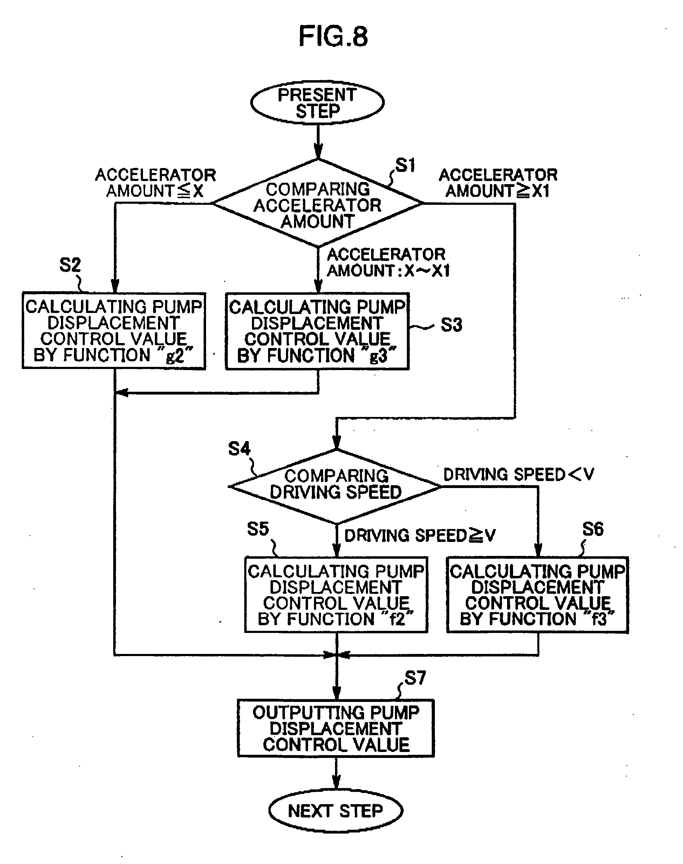

This point is explained in detail hereinafter. As shown with the mark "a" in Fig.7, in a set value "X" for manipulated accelerator amount, the set value for pump displacement is determined by a function "g1" in response to the engine rotating speed. In the second embodiment, the function varies in accordance with the manipulated accelerator amount. Accordingly, in a little manipulated accelerator zone where the manipulated accelerator amount is less than the set value "X", as shown with the mark "b" in Fig.7, the set value for pump displacement is determined by a function "g2" which is set so as to become larger than the set value for pump displacement determined by the function"gX". On the other hand, within a large manipulated accelerator zone where the manipulated accelerator amount is less than X1 and more than X, denoted by "X-X1" in Fig.8, the set value for pump displacement is determined by a function "g3" which is set so as to become smaller than the set value for pump displacement determined by the function "g1". Moreover, in an extra large manipulated accelerator zone where the manipulated accelerator amount is not less than X1, the control which uses the function corresponding to the driving speed as explained above as the first embodiment is executed as being in a high speed zone.

This control is explained in detail hereinafter by the flow chart Fig.8, In Fug.8, in a step S1, the detected manipulated accelerator amount and the set value "X" are compared each other. In the case that the accelerator amount is not more than "X", a step S2 is executed. On the other hand, in the case that the accelerator amount is within the range of "X~X1", a step S3 is executed. In the step S2, the set value for pump displacement is determined by the function "g2". On the other hand, in the step S3, the set value for pump displacement is determined by the function "g3".

In the case that the accelerator amount is not less than "X1", the processes explained in the first embodiment are executed as being in the high speed zone. That is to say, in a step S4, the detected driving speed and the set value "V" are compared each other. In the case that the driving speed is not less than "V", the set value for pump displacement is determined by the function "f2" in a step S5. In the case that the driving speed is less than "V", the set value for pump displacement is determined by the function "f3" in a step 86.

In a step S7, the set value for pump displacement is outputted, which is determined in one of the above steps B2, B5, S6.

In this second embodiment, it is possible to decrease the engine rotating speed by increasing the pump displacement even in the little manipulated accelerator zone. Accordingly, even in the driving condition where energy and load necessary for driving is low, for example, in driving at low speed or in driving on an uphill road, the fuel efficiency is improved.

Here, also in the second embodiment, as in the first embodiment, setting a lower limit in the little manipulated accelerator zone, it is possible to keep the function constant regardless of the manipulated accelerator amount in an extra little manipulated accelerator zone where the amount is less than the lower limit. In this case, since the set value for pump displacement can be kept within a certain range, in the extra little manipulated accelerator zone, it is possible to remove a disadvantage of engine stopping which is caused by reason of too much pump displacement.

In a hydraulic driven vehicle of the present invention, an engine 1 drives a variable displacement hydraulic pump 2. A hydraulic motor 3 is driven by hydraulic oil supplied from the hydraulic pump 2. A rotation number of the engine 1 is detected by an engine rotating speed detecting means 15, and a driving speed is detected by a driving speed defecting means 16. A control means 12 determines a set value for pump displacement of the hydraulic pump 2 by calculating with a function. The function is set so as to make the set value in a high speed zone larger than the set value in a low speed zone. Accordingly, in a HST type hydraulic driven vehicle, fuel efficiency is improved in the high speed zone.

## Claims

1. A control apparatus of a hydraulic driven vehicle, comprising:
an engine (1);
a variable displacement hydraulic pump (2) driven by said engine (1);
a hydraulic motor (3) driven by hydraulic oil supplied from said hydraulic pump (2);
a driving speed detecting means (16) for detecting a driving speed of the hydraulic driven vehicle; and
an engine rotating speed detecting means (15) for detecting a rotation number of said engine (1);
**characterized in that**
the control apparatus further comprising:
a control means (12) for controlling a displacement of said variable displacement hydraulic pump (2) based on a set value for pump displacement, the set value being a function of an engine rotating speed detected by said engine rotating speed detecting means (15) and a driving speed of the hydraulic driven vehicle detected by said driving speed detecting means (16), the function making the set value in a high speed zone larger than the set value in a low speed, the high and low speed zones determined by the driving speed detected by said driving speed detecting means (16).

2. The control apparatus according to claim 1, wherein
said control means (12) keeps the function constant regardless of a change of the driving speed, either in the high speed zone where the driving speed is higher than an upper limit for driving speed or in the low speed zone where the driving speed is lower than a lower limit for driving speed, or both in the zones.

3. The control apparatus according to claim 1 or 2, wherein
said control means (12) controls said engine (1) so as to keep the driving speed lower than the upper limit.

4. The control apparatus according to any one of claims 1 through 3, wherein
the function of said control means (12) regulates so that the set value for pump displacement in a tittle manipulated accelerator zone is larger than the set value for pump displacement in a large manipulated acceleration zone, and
the little manipulated acceleration zone where a manipulated acceleration amount detected by a manipulated accelerator amount detecting means (17) and inputted by an acceleration inputting means (11) is not more than a set value for manipulated accelerator amount, and
the large manipulated acceleration zone where the manipulated accelerator amount is more than the set value for manipulated accelerator amount.

5. The control apparatus according to claim 4, wherein
said control means (12) keeps the function constant regardless of a change of manipulated accelerator amount in an extra little manipulated accelerator zone where the manipulated accelerator amount is less than a lower limit of the little manipulated accelerator zone.

## Patentansprüche

1. Steuerungsgerät eines hydraulisch angetriebenen Fahrzeugs, das Folgendes aufweist:
eine Maschine (1);
eine Hydraulikpumpe mit variabler Verdrängung (2), die durch die Maschine (1) angetrieben wird;
einen Hydraulikmotor (3), der durch ein Hydrauliköl angetrieben wird, das von der Hydraulikpumpe (2) zugeführt wird;
eine Antriebsgeschwindigkeitserfassungseinrichtung (16) zum Erfassen einer Antriebsgeschwindigkeit des hydraulisch angetriebenen Fahrzeugs; und
eine Maschinendrehzahlerfassungseinrichtung (15) zum Erfassen einer Drehzahl der Maschine (1);
**dadurch gekennzeichnet, dass**
das Steuerungsgerät des Weitern Folgendes aufweist:
eine Steuerungseinrichtung (12) zum Steuern einer Verdrängung der Hydraulikpumpe mit variabler Verdrängung (2) auf der Grundlage eines festgelegten Werts für eine Pumpenverdrängung, wobei der festgelegte Wert eine Funktion einer Maschinendrehzahl, die durch die Maschinendrehzahlerfassungseinrichtung (15) erfasst wird, und einer Antriebsgeschwindigkeit des hydraulisch angetriebenen Fahrzeugs ist, die durch die Antriebsgeschwindigkeitserfassungseinrichtung (16) erfasst wird, wobei die Funktion den festgelegten Wert in einer Hochgeschwindigkeitszone größer macht als den festgelegten Wert bei einer niedrigen Geschwindigkeit, wobei die Hochgeschwindigkeitszone und die Niedriggeschwindigkeitszone durch die Antriebsgeschwindigkeit bestimmt sind, die durch die Antriebsgeschwindigkeitserfassungseinrichtung (16) erfasst wird.

2. Steuerungsgerät nach Anspruch 1, wobei
die Steuerungseinrichtung (12) die Funktion unabhängig von einer Änderung der Antriebsgeschwindigkeit entweder in der Hochgeschwindigkeitszone, in der die Antriebsgeschwindigkeit höher ist als eine obere Grenze für die Antriebsgeschwindigkeit, oder in der Niedriggeschwindigkeitszone, in der die Antriebsgeschwindigkeit niedriger ist als eine untere Grenze für die Antriebsgeschwindigkeit, oder in den beiden Zonen konstant hält.

3. Steuerungsgerät nach Anspruch 1 oder 2, wobei
die Steuerungseinrichtung (12) die Maschine (1) steuert, um die Antriebsgeschwindigkeit niedriger als die obere Grenze zu halten.

4. Steuerungsgerät nach einem der Ansprüche 1 bis 3, wobei
die Funktion der Steuerungseinrichtung (12) derart reguliert, dass der festgelegte Wert für die Pumpenverdrängung in einer Zone mit gering manipuliertem Beschleuniger größer ist als der festgelegte Wert für die Pumpenverdrängung in einer Zone mit stark manipulierter Beschleunigung, und
die Zone mit gering manipulierter Beschleunigung eine Zone ist, in der ein manipuliertes Beschleunigerausmaß, das durch eine Erfassungseinrichtung für ein manipuliertes Beschleunigerausmaß (17) erfasst wird und durch eine Beschleunigungseingabeeinrichtung (11) eingegeben wird, nicht größer ist als ein festgelegter Wert für ein manipuliertes Beschleunigerausmaß, und
die Zone mit stark manipulierter Beschleunigung eine Zone ist, in der das manipulierte Beschleunigerausmaß größer ist als der festgelegte Wert für das manipulierte Beschleunigerausmaß.

5. Steuerungsgerät nach Anspruch 4, wobei
die Steuerungseinrichtung (12) die Funktion unabhängig von einer Änderung eines manipulierten Beschleunigerausmaßes in einer Zone mit besonders gering manipuliertem Beschleuniger konstant hält, in der das manipulierte Beschleunigerausmaß geringer ist als eine untere Grenze der Zone mit gering manipuliertem Beschleuniger.

## Revendications

1. Appareil de commande d'un véhicule à entraînement hydraulique, comprenant :
un moteur (1) ;
une pompe hydraulique à cylindrée variable (2) entraînée par ledit moteur (1) ;
un moteur hydraulique (3) entraîné par l'huile hydraulique alimentée à partir de ladite pompe hydraulique (2) ;
un moyen (16) de détection de vitesse d'entraînement pour détecter une vitesse d'entraînement du véhicule à entraînement hydraulique ; et
un moyen (15) de détection de vitesse de rotation du moteur pour détecter le nombre de rotations dudit moteur (1) ;
**caractérisé en ce que**
l'appareil de commande comprenant en outre :
un moyen de commande (12) pour commander une cylindrée de ladite pompe hydraulique à cylindrée variable (2) sur la base d'une valeur définie de la cylindrée de la pompe, la valeur définie étant une fonction d'une vitesse de rotation du moteur détectée par ledit moyen (15) de détection de vitesse de rotation du moteur et d'une vitesse d'entraînement du véhicule à entraînement hydraulique détectée par ledit moyen (16) de détection de vitesse d'entraînement, la fonction rendant la valeur définie dans une région à grande vitesse plus importante que la valeur définie dans une région à faible vitesse, les régions à grande et à faible vitesses déterminées par la vitesse d'entraînement détectée par ledit moyen (16) de détection de vitesse d'entraînement.

2. Appareil de commande selon la revendication 1, dans lequel
ledit moyen de commande (12) maintient la fonction constante indépendamment d'un changement de la vitesse d'entraînement, soit dans la région à grande vitesse où la vitesse d'entraînement est au dessus d'une limite supérieure de vitesse d'entraînement ou dans la région à faible vitesse où la vitesse d'entraînement est au dessous d'une limite inférieure de vitesse d'entraînement, ou dans les deux régions.

3. Appareil de commande selon la revendication 1 ou 2, dans lequel
ledit moyen de commande (12) commande ledit moteur (1) afin de maintenir la vitesse d'entraînement au dessous de la limite supérieure.

4. Appareil de commande selon l'une quelconque des revendications 1 à 3, dans lequel
la fonction dudit moyen de commande (12) règle la valeur définie de la cylindrée de la pompe dans une région d'accélération faiblement manipulée de façon qu'elle soit plus grande que la valeur définie d'une cylindrée de la pompe dans une région d'accélération fortement manipulée, et
la région d'accélération faiblement manipulée où une grandeur d'accélération manipulée détectée par un moyen (17) de détection de grandeur d'accélération manipulée et introduite par un moyen d'entrée d'accélération (11) ne dépasse pas une valeur définie de la grandeur d'accélération manipulée, et
la région d'accélération fortement manipulée où la grandeur d'accélération manipulée est supérieure à la valeur définie de la grandeur d'accélération manipulée.

5. Appareil de commande selon la revendication 4, dans lequel
ledit moyen de commande (12) maintient la fonction constante indépendamment d'un changement d'une grandeur d'accélération manipulée dans une région d'accélération très faiblement manipulée où la grandeur d'accélération manipulée est au dessous d'une limite inférieure de la région d'accélération faiblement manipulée.
